# EUROPÄISCHE PATENTSCHRIFT

(11) **EP 4 244 025 B1**
(45) Veröffentlichungstag und Bekanntmachung des Hinweises auf die Patenterteilung: **09.10.2024**
(21) Anmeldenummer: 21801917.2
(22) Anmeldetag: 29.10.2021
(51) Int. Cl.: B25J 9/04, B25J 9/10, B25J 19/00

(54) **ROBOTERAM UND VERFAHREN ZUM MONTIEREN EINES ROBOTERARMS**
ROBOT ARM AND METHOD FOR ASSEMBLING A ROBOT ARM
BRAS ROBOTISÉ ET PROCÉDÉ DE MONTAGE D'UN BRAS ROBOTISÉ

(30) Priorität: 13.11.2020 DE 102020214332
(43) Veröffentlichungstag der Anmeldung: 20.09.2023
(73) Patentinhaber: KUKA Deutschland GmbH, 86165 Augsburg (DE)
(72) Erfinder: RIEDEL, Martin, 86165 Augsburg (DE)
(74) Vertreter: Oelke, Jochen
(86) Internationale Anmeldenummer: PCT/EP2021/080125
(87) Internationale Veröffentlichungsnummer: WO 2022/101030

(56) Entgegenhaltungen:
- EP-A1- 3 626 406
- CN-A- 104 786 217
- DE-A1- 102018 219 447

## Beschreibung

Die Erfindung betrifft einen Roboterarm, aufweisend mehrere Glieder und diese Glieder gegeneinander verstellbar verbindende mehrere Gelenke, sowie ein Verfahren zum Montieren eines Roboterarms.

Die DE 10 2018 219 447 A1 beschreibt eine Roboterstruktur, aufweisend mehrere Glieder und diese Glieder miteinander verbindende Gelenke, wobei wenigstens ein Glied dieser Glieder ein erstes Rohrstück umfasst, das eine erste Mantelaußenwand aufweist und ein zweites Rohrstück umfasst, das eine zweite Mantelaußenwand aufweist, wobei das zweite Rohrstück mit seiner Längserstreckung in einem Winkel zur Längserstreckung des ersten Rohrstücks angeordnet ist, derart dass das zweite Rohrstück in zwei gegenüberliegende Rohrausschnitte des ersten Rohrstücks eingesteckt ist und dabei das zweite Rohrstück die erste Mantelaußenwand des ersten Rohrstücks an gegenüberliegenden Seiten durchdringt, wobei das zweite Rohrstück mit dem ersten Rohrstück mittels eines ersten Verbindungselements und eines zweiten Verbindungselements starr verbunden ist.

Aufgabe der Erfindung ist es, einen Roboterarm zu schaffen, der aus vormontierten Baugruppen auf einfache und kostengünstige Weise zu einem kompletten Roboterarm endmontiert werden kann.

Die Aufgabe wird erfindungsgemäß gelöst durch einen Roboterarm, aufweisend mehrere Glieder und diese Glieder gegeneinander verstellbar verbindende mehrere Gelenke, wobei wenigstens ein erstes Glied dieser Glieder einen ersten Lagerzapfen und einen dem ersten Lagerzapfen gegenüberliegenden zweiten Lagerzapfen aufweist, und ein mit dem ersten Glied mittels eines der Gelenke gelenkig verbundenes zweites Glied einen ersten Lagerflansch aufweist, an dem der erste Lagerzapfen des ersten Gliedes drehbar gelagert ist und einen zweiten Lagerflansch aufweist, an dem der zweite Lagerzapfen des ersten Gliedes drehbar gelagert ist, wobei der erste Lagerflansch des zweiten Gliedes eine umfangsseitig geschlossene Aussparung aufweist, in welcher der erste Lagerzapfen des ersten Gliedes aufgenommen ist, und der zweite Lagerflansch des zweiten Gliedes eine umfangsseitig offene Aussparung aufweist, in welcher der zweite Lagerzapfen des ersten Gliedes aufgenommen ist, wobei eine Öffnung der umfangsseitig offenen Aussparung eine Öffnungsweite aufweist, die größer ist, als die Breite des zweiten Lagerzapfens des ersten Gliedes, und der zweite Lagerflansch ein Sicherungsmittel aufweist, mit dem der zweite Lagerzapfen des ersten Gliedes an der umfangsseitig offenen Aussparung des zweiten Lagerflansches gesichert ist.

Der Roboterarm kann beispielsweise eine Roboterstruktur aufweisen, umfassend mehrere Glieder und diese Glieder miteinander verbindende Gelenke, wobei wenigstens ein Glied dieser Glieder ein erstes Rohrstück umfasst, das eine erste Mantelaußenwand aufweist und ein zweites Rohrstück umfasst, das eine zweite Mantelaußenwand aufweist, wobei das zweite Rohrstück mit seiner Längserstreckung in einem Winkel zur Längserstreckung des ersten Rohrstücks angeordnet ist, derart dass das zweite Rohrstück in zwei gegenüberliegende Rohrausschnitte des ersten Rohrstücks eingesteckt ist und dabei das zweite Rohrstück die erste Mantelaußenwand des ersten Rohrstücks an gegenüberliegenden Seiten durchdringt, wobei das zweite Rohrstück mit dem ersten Rohrstück mittels eines ersten Verbindungselements und eines zweiten Verbindungselements starr verbunden ist, und dazu das erste Verbindungselement einen ersten Ringabschnitt aufweist, der mit seiner ersten Ringinnenmantelwand an der zweiten Mantelaußenwand des zweiten Rohrstücks bündig anliegt und mit seiner ersten Ringaußenmantelwand an einer ersten Ausschnittskante des einen Rohrausschnitts des ersten Rohrstücks bündig anliegt und das erste Verbindungselement einen sich an den ersten Ringabschnitt anschließenden Laschenabschnitt aufweist, der sich mit seiner Längserstreckung entlang der Längserstreckung des ersten Rohrstücks an dessen erster Mantelaußenwand bündig anliegend erstreckt, und dazu das zweite Verbindungselement einen zweiten Ringabschnitt aufweist, der mit seiner zweiten Ringinnenmantelwand an der zweiten Mantelaußenwand des zweiten Rohrstücks bündig anliegt und mit seiner zweiten Ringaußenmantelwand an einer zweiten Ausschnittskante des anderen Rohrausschnitts des ersten Rohrstücks bündig anliegt und das zweite Verbindungselement einen sich an den zweiten Ringabschnitt anschließenden Zylindermantelabschnitt aufweist, der an einer Innenwand der ersten Rohrstücks bündig anliegt.

Das zweite Rohrstück kann dabei insbesondere mit seiner Längserstreckung in einem rechten Winkel zur Längserstreckung des ersten Rohrstücks in das erste Rohrstück eingesetzt sein, so dass das zweite Rohrstück senkrecht zu dem ersten Rohrstück angeordnet ist.

Das erste Verbindungselement und/oder das zweite Verbindungselement können jeweils als ein einstückiger Kunststoffkörper ausgebildet sein.

Der erste Lagerzapfen und der dem ersten Lagerzapfen gegenüberliegende zweite Lagerzapfen können in der Bauart von Wellenstummeln ausgebildet sein, deren Wellendrehachsen miteinander fluchten. Insofern können der erste Lagerzapfen und der zweite Lagerzapfen eine gemeinsame Drehachse bilden, um welche das erste Glied relativ zum zweiten Glied schwenkbar gelagert ist.

Das Gelenk, welches das erste Glied mit dem zweiten Glied drehbar verbindet, kann insoweit als ein Drehgelenk ausgebildet sein. Der Roboterarm kann ein einziges derartiges Gelenk aufweisen, das erfindungsgemäß ein solches erstes Glied mit einem solchen zweiten Glied drehbar verbindet. Alternativ können auch zwei oder mehrere derartige Gelenk an dem Roboterarm vorgesehen sein, die erfindungsgemäß solche Paare von ersten Gliedern und zweiten Gliedern drehbar verbinden. Dies kann bedeuten, dass der Roboterarm nicht nur aus einer ersten Baugruppe von Gliedern und Gelenken und einer zweiten Baugruppe von Gliedern und Gelenken besteht, sondern auch eine dritte und/oder weitere Baugruppe von Gliedern und Gelenken aufweisen kann.

Der erste Lagerflansch und der zweite Lagerflansch können das erste Glied bzw. den ersten Lagerzapfen und den gegenüberliegenden zweiten Lagerzapfen des ersten Glieds von gegenüberliegenden Seiten einfassen. Insoweit fluchten der erste Lagerflansch und der zweite Lagerflansch mit dem ersten Lagerzapfen und dem zweiten Lagerzapfen. In einer bauartbedingten Grundkonfiguration des Roboterarms können der erste Lagerzapfen und der gegenüberliegende zweite Lagerzapfen vertikal ausgerichtet angeordnet sein, insbesondere stets in allen Drehstellungen des Gelenks, welches das erste Glied mit dem zweiten Glied drehbar verbindet, vertikal ausgerichtet angeordnet sein. Demgemäß können der erste Lagerflansch und der zweite Lagerflansch übereinander angeordnet sein, insbesondere stets in allen Drehstellungen des Gelenks, welches das erste Glied mit dem zweiten Glied drehbar verbindet, übereinander angeordnet sein. Dieses Gelenk kann insofern in Art eines der ersten drei Gelenke in einer kinematischen Kette von Gelenken eines SCARA-Roboters ausgebildet sein.

Die umfangsseitig geschlossene Aussparung des ersten Lagerflansches kann eine Bohrung in einer zumindest im Wesentlichen ebenen ersten Flanschplatte sein. Die erste Flanschplatte kann von einem ersten Blech gebildet werden. Das erste Blech kann zu seiner Versteifung mit Rippen, Sicken und/oder Randabkantungen versehen sein. Die erste Flanschplatte kann Teil eines Schlittens einer Linearachse sein.

Die umfangsseitig offene Aussparung des zweiten Lagerflansches kann eine randoffene Bohrung in einer zumindest im Wesentlichen ebenen zweiten Flanschplatte sein. Das zweite Blech kann zu seiner Versteifung mit Rippen, Sicken und/oder Randabkantungen versehen sein. Die zweite Flanschplatte kann Teil eines Schlittens einer Linearachse sein.

Die Öffnung der umfangsseitig offenen Aussparung kann durch einen randoffenen Ausbruch in dem zweiten Lagerflansch bzw. in der zweiten Flanschplatte gebildet werden. Die Öffnungsweite der Öffnung muss so bemessen sein, dass der zweite Lagerzapfen in einer radialen Richtung von außerhalb des zweiten Lagerflansches in die Öffnung der umfangsseitig offenen Aussparung hineinbewegt werden kann. Der zweite Lagerzapfen wird erfindungsgemäß also nicht in einer axialen Richtung, d.h. nicht in Richtung der Drehachse des Gelenks, welches das erste Glied mit dem zweiten Glied drehbar verbindet, in die umfangsseitig offene Aussparung eingesteckt, sondern von der Seite, d.h. radial zur Drehachse des Gelenks, welches das erste Glied mit dem zweiten Glied drehbar verbindet, in die umfangsseitig offene Aussparung eingeschoben bzw. eingeschwenkt.

Die Öffnungsweite der Öffnung muss demgemäß zumindest geringfügig größer sein, als die Breite des zweiten Lagerzapfens. Im Falle eines kreiszylindrischen zweiten Lagerzapfens wird die Breite des zweiten Lagerzapfens durch den Durchmesser des zweiten Lagerzapfens definiert. Insofern muss die Öffnungsweite der Öffnung im Falle eines kreiszylindrischen zweiten Lagerzapfens demgemäß zumindest geringfügig größer sein, als der Durchmesser des zweiten Lagerzapfens.

Indem der erste Lagerflansch des zweiten Gliedes eine umfangsseitig geschlossene Aussparung aufweist, in welcher der erste Lagerzapfen des ersten Gliedes aufgenommen ist, und der zweite Lagerflansch des zweiten Gliedes eine umfangsseitig offene Aussparung aufweist, in welcher der zweite Lagerzapfen des ersten Gliedes aufgenommen ist, wobei eine Öffnung der umfangsseitig offenen Aussparung eine Öffnungsweite aufweist, die größer ist, als die Breite des zweiten Lagerzapfens des ersten Gliedes, und der zweite Lagerflansch ein Sicherungsmittel aufweist, mit dem der zweite Lagerzapfen des ersten Gliedes an der umfangsseitig offenen Aussparung des zweiten Lagerflansches gesichert ist, kann ein Roboterarm geschaffen werden, der aus vormontierten Baugruppen auf einfache und kostengünstige Weise zu einem kompletten Roboterarm endmontiert werden kann.

Die üblichen Strukturen von Roboterarmen sind darauf ausgerichtet, den Roboterarm schrittweise, d.h. Gelenk für Gelenk aufzubauen und zu montieren. Dabei werden die Strukturglieder im einfachsten Falle über Gelenkeinheiten, welche Antrieb, Getriebe, Sensoren, Bremse und Lager umfassen können, beweglich zueinander miteinander verbunden. Üblich sind Schraubverbindungen, sowohl antriebsseitig als auch abtriebsseitig.

Existiert keine zusammenhängende Gelenkeinheit, so müssen die entsprechenden Komponenten einzeln mit den Strukturelementen verbunden werden. Dies bedeutet meist einen komplexeren Aufbau bzw. eine aufwändige Montage.

Bisher muss der Roboterarm somit Schritt für Schritt aufgebaut und montiert werden. Eine Vormontage von Teilgruppen insbesondere des gesamten Armes ist bisher nicht möglich, da speziell das Fügen von Achsen problematisch sein kann. Insbesondere dann, wenn die Achsen beispielsweise nicht über Kreuzrollenlager, sondern über kostengünstige einfache Rillenkugellager in einer steifen Fest-Los-Anordnung mit weitem Stützabstand gehalten werden. Wird das Gelenk jedoch, wie erfindungsgemäß vorgesehen, nicht Teil für Teil, sondern mittels zweier vormontierter Baugruppen aufgebaut, ist bei den bekannten Arten von Gliedern und Gelenken das Fügen der Welle durch mehrere Bauteile kritisch, da die bevorzugten Fügeverfahren aus Kosten- und Gewichtsgründen ein Verpressen oder Verkleben sind.

Durch die Erfindung wird es aufgrund des erfindungsgemäßen Gelenkaufbaus das Dilemma zwischen kostengünstiger Vormontierbarkeit von Baugruppen und schlankem, leichtem und integriertem Gelenkaufbau, insbesondere im Bereich von kostengünstigen Robotern für den Konsumbereich gelöst.

Dabei soll die Erfindung es ermöglichen, einerseits die kompletten Strukturmechanik und andererseits die komplette Linearbasis mit Antrieben und Elektronik vorzumontieren und diese einfach im Nachhinein belastungsideal zu verbinden.

Das Sicherungsmittel, mit dem der zweite Lagerzapfen des ersten Gliedes an der umfangsseitig offenen Aussparung des zweiten Lagerflansches gesichert ist, ist dazu ausgebildet, die Öffnung zu verschließen, wenn der zweite Lagerzapfen in die umfangsseitig offene Aussparung eingeschoben bzw. eingeschwenkt ist. Insofern verhindert das Sicherungsmittel nach dem Einschieben bzw. Einschwenken des zweiten Lagerzapfens ein unerwünschtes herausdrücken oder herausschwenken des zweiten Lagerzapfens aus der umfangsseitig offenen Aussparung des zweiten Lagerflansches. Das Sicherungsmittel kann lösbar mit dem zweiten Lagerflansch verbunden sein. Das Sicherungsmittel kann insbesondere durch lösbare Befestigungsmittel lösbar mit dem zweiten Lagerflansch verbunden sein. Die lösbaren Befestigungsmittel können beispielsweise Schrauben sein. Alternativ kann das Sicherungsmittel unlösbar, d.h. jedenfalls nicht zerstörungsfrei lösbar, mit dem zweiten Lagerflansch verbunden sein. Derartige unlösbare Sicherungsmittel können beispielsweise Nieten, Rastmittel, Klebeverbindungen und/oder Schweißverbindungen umfassen.

Das Sicherungsmittel kann von einem mit dem zweiten Lagerflansch des zweiten Gliedes lösbar verbundenen ersten Lagerträgerring gebildet werden, der einen ersten Sitz für ein erstes Lager bildet, welches den zweiten Lagerzapfen des ersten Gliedes drehbar an dem zweiten Lagerflansch des zweiten Gliedes lagert.

Der erste Lagerträgerring kann einen ersten Tragring umfassen, der Umfangsseitig nach außen weisend einen ersten Befestigungsflanschabschnitt aufweist, mit dem der erste Lagerträgerring an dem zweiten Lagerflansch des zweiten Glieds befestigt werden kann. Der erste Lagerträgerring kann dabei einen nach innen weisenden ersten Sitz aufweisen, der ausgebildet ist, einen Außenring eines Lagers, insbesondere eines Wälzlagers aufzunehmen.

Gegenüber dem üblichen Stand der Technik erfolgt die Montage der beispielhaften Achse erfindungsgemäß nicht durch axiales Zusammenschieben einzelner Komponenten, sondern durch ein Schwenken bzw. Eindrehen des ersten Gliedes in das zweite Glied, so dass der erste Lagerzapfen in die umfangsseitig geschlossene Aussparung des ersten Lagerflansches eintaucht. Der leichten Schrägstellung des ersten Glieds, sowie der nachfolgenden Schwenkbewegung kann der Lagerringträger folgen, da der zu diesem Zeitpunkt noch nicht fest mit dem Lagerflansch verbunden ist, sondern nur in der Bohrung aufliegt Eine Fixierung erfolgt in einem späteren Schritt, im vollständig gefügten Zustand.

Die Schwenkbewegung des ersten Glieds ist nur möglich, da der zweite Lagerflansch die umfangsseitig offene Aussparung besitzt, bei welcher der zweite Lagerflansch nach vorne hin, d.h. in Richtung auf den Roboterarm zuweisend, eine Öffnung bzw. einen Spalt besitzt, die ein Hindurchschwenken des zweiten Lagerzapfens in den zweiten Lagerflansch ermöglicht. Diese Aussparung befindet sich in einer bevorzugten Ausführungsvariante am unteren Lager. Der erste Lagerträgerring wird nach der Schwenkbewegung des ersten Glieds so an dem zweiten Lagerflansch befestigt, dass das erste Glied an dem zweiten Glied schwenkbar gelagert ist.

Der erste Lagerträgerring und der zweite Lagerträgerring werden jeweils über ihren zugeordneten ersten Lagerflansch bzw. zweiten Lagerflansch mit dem zweiten Glied verbunden, beispielsweise verschraubt, verklebt oder verrastet.

Eine entscheidende Besonderheit in einer speziellen Ausführungsform liegt unter anderem darin, dass der obere erste Lagerträgerring vollständig über seinen Umfang hinweg den ersten Lagerflansch kontaktiert, aber der untere zweite Lagerträgerring jedoch nur über weniger als seinen Gesamtumfang, insbesondere beispielsweise lediglich über Dreiviertel seines Gesamtumfangs oder nur zur Hälfte seines Gesamtumfangs mit dem zweiten Lagerflansch kontaktiert. Mit entscheidend ist jedoch, dass die zylindrische Außenmantelfläche des unteren zweiten Lagerträgerrings auf seiner der Öffnung des zweiten Lagerflansches abgewandten Seite sich auf der zylindrischen Innenmantelfläche der umfangsseitig offenen Aussparung des zweiten Lagerflansches so abstützt, dass hier alle Druckkräfte übertragen werden können, die aufgrund des Kippmomentes durch Gravitationskraft in dem Gelenk entstehen, welches das erste Glied mit dem zweiten Glied verbindet.

Somit werden sämtliche Kräfte direkt und optimal von der Achse über die Lager und die Ringe auf den Rahmen übertragen, ohne die Schrauben belasten zu müssen, sofern die Hauptlasten auf den Roboterarm und seinen Endeffektor vertikal nach unten gerichtet sind.

Sollte der Arm dennoch nach oben gezogen oder nach oben gebogen werden, ist die untere Lagerung über die Verschraubung des ersten Lagerträgerrings mit dem zweiten Lagerflansch stabil genug, um auch diese Belastung aufnehmen zu können.

Als alternative Lagervarianten können eine Fist-Los-Lagerung oder auch eine angestellte Lagerung möglich sein, bei der das obere Lager die Axialkraft nach oben und das untere Lager die Axialkraft nach unten aufnimmt.

Der erste Lagerflansch des zweiten Gliedes kann einen lösbar befestigten zweiten Lagerträgerring aufweisen, der einen zweiten Sitz für ein zweites Lager bildet, welches den ersten Lagerzapfen des ersten Gliedes drehbar an dem ersten Lagerflansch des zweiten Gliedes lagert, wobei der erste Lagerflansch des zweiten Gliedes einen Montageraum aufweist, der derart bemessen ist, dass der zweite Lagerträgerring in einem von dem ersten Lagerflansch gelösten Zustand um eine zumindest im Wesentlichen senkrecht zur Drehachse des Gelenks, welches das erste Glied mit dem zweiten Glied drehbar verbindet, verlaufenden Schwenkachse innerhalb des Montageraums schwenkbar ist.

Der zweite Lagerträgerring kann einen zweiten Tragring umfassen, der Umfangsseitig nach außen weisend einen zweiten Befestigungsflanschabschnitt aufweist, mit dem der zweite Lagerträgerring an dem ersten Lagerflansch des ersten Glieds befestigt werden kann. Der zweite Lagerträgerring kann dabei einen nach innen weisenden zweiten Sitz aufweisen, der ausgebildet ist, einen Außenring eines Lagers, insbesondere eines Wälzlagers aufzunehmen.

Der Montageraum kann begrenzt werden durch hochgezogene, insbesondere abgewinkelte Randabschnitte des ersten Lagerflansches. Die seitlichen hochgezogenen, insbesondere abgewinkelten Randabschnitte des ersten Lagerflansches begrenzen den Montageraum insoweit seitlich. Die Unterseite des Montageraums kann durch die Hauptfläche des ersten Lagerflansches gebildet werden, d.h. durch die Flanschfläche, in welcher die umfangsseitig geschlossene Aussparung angeordnet ist. Der Montageraum kann nach oben hin offen ausgebildet sein.

Innerhalb des Montageraums ist der zweite Lagerträgerring schwenkbar. Die Schwenkbarkeit des zweiten Lagerträgerrings muss dabei lediglich in einem solchen Ausmaß möglich sein, dass in einer maximalen Schwenklage des ersten Glieds, insbesondere des ersten Lagerzapfens des ersten Glieds, welche für die erfindungsgemäße Endmontage notwendig ist, der ersten Lagerzapfen des ersten Glieds in den zweiten Lagerträgerring eingeführt werden kann. In der maximalen Schwenklage des zweiten Lagerträgerrings erstreckt sich der zweite Lagerträgerring demgemäß über eine Höhe, die geringer ist, als die Bauhöhe des Montageraums bzw. als die Bauhöhe der hochgezogenen, insbesondere abgewinkelten Randabschnitte des ersten Lagerflansches.

Das Sicherungsmittel kann von einem mit dem zweiten Lagerflansch des zweiten Gliedes lösbar verbundenen ersten Lagerträgerring gebildet werden, der einen ersten Sitz für ein erste Lager bildet, welches den zweiten Lagerzapfen des ersten Gliedes drehbar an dem zweiten Lagerflansch des zweiten Gliedes lagert, wobei der zweite Lagerflansch in einer Grundkonfiguration des Roboterarms in Schwerkraftrichtung unterhalb des ersten Lagerflansches angeordnet ist, und der erste Lagerflansch des zweiten Gliedes kann dabei einen lösbar befestigten zweiten Lagerträgerring aufweisen, der einen zweiten Sitz für ein zweites Lager bildet, welches den ersten Lagerzapfen des ersten Gliedes drehbar an dem ersten Lagerflansch des zweiten Gliedes lagert, wobei der erste Lagerflansch in einer Grundkonfiguration des Roboterarms in Schwerkraftrichtung oberhalb des zweiten Lagerflansches angeordnet ist.

In der Grundkonfiguration des Roboterarms können der erste Lagerzapfen und der gegenüberliegende zweite Lagerzapfen vertikal ausgerichtet angeordnet sein, insbesondere stets in allen Drehstellungen des Gelenks, welches das erste Glied mit dem zweiten Glied drehbar verbindet, vertikal ausgerichtet angeordnet sein. Demgemäß können der erste Lagerflansch und der zweite Lagerflansch übereinander angeordnet sein, insbesondere stets in allen Drehstellungen des Gelenks, welches das erste Glied mit dem zweiten Glied drehbar verbindet, übereinander angeordnet sein. Dieses Gelenk kann insofern in Art eines der ersten drei Gelenke in einer kinematischen Kette von Gelenken eines SCARA-Roboters ausgebildet sein.

Das von dem ersten Glied und dem zweiten Glied gebildete Gelenk kann einen konstruktiv eingeschränkten Schwenkwinkel von weniger als 360 Grad aufweisen, insbesondere von weniger als 270 Grad, oder lediglich von 180 Grad aufweisen, wobei die Öffnung der umfangsseitige offenen Aussparung am zweiten Lagerflansch derart angeordnet ist, dass das von dem Gelenk auskragende erste Glied in einer mittleren Schwenkstellung des Gelenks im Winkelbereich der Öffnung der umfangsseitigen offenen Aussparung auskragt und die Aussparung an einem der Öffnung diametral gegenüberliegenden Randabschnitt einen Druckkraft-Stützabschnitt aufweist.

In einer speziellen Ausführungsform kann das zweite Glied einen Schlitten einer Linearachse bilden, welche beispielsweise in einer vertikalen Richtung linear höhenverstellbar ausgebildet sein kann. Das zweite Glied bzw. der Schlitten kann dazu ein oder mehrere Gleitsteine aufweisen, mittels derer das zweite Glied bzw. der Schlitten an Schienen linear höhenverstellbar sein kann. Die Schienen können beispielsweise an einer ortsfesten Wand oder einem ortsfesten Gestell befestigt sein.

Das zweite Glied kann aus mehreren Blechen zusammengesetzt sein, wobei eines der Bleche den ersten Lagerflansch und ein anderes Blech den zweiten Lagerflansch bilden kann.

An dem zweiten Glied kann ein erster Motor, insbesondere ein erster elektrischer Motor angeordnet sein. Der erste Motor kann eine erste Motorwelle aufweisen. Die erste Motorwelle kann beispielsweise ein erstes Ritzel aufweisen, auf welchem ein erster Riemen aufgespannt ist. Der erste Riemen treibt dabei ein erstes Abtriebsrad an, welches fest mit dem ersten Glied verbunden ist. Angetrieben durch den ersten Motor treibt in einer solchen Ausführungsform der erste Riemen das erste Abtriebsrad an, wodurch aufgrund der festen Verbindung mit dem ersten Glied das erste Glied relativ zum zweiten Glied automatisch geschwenkt werden kann.

An dem zweiten Glied kann optional außerdem ein zweiter Motor, insbesondere ein zweiter elektrischer Motor angeordnet sein. Der zweite Motor kann eine zweite Motorwelle aufweisen. Die zweite Motorwelle kann beispielsweise ein zweites Ritzel aufweisen, auf welchem ein zweiter Riemen aufgespannt ist. Der zweite Riemen treibt in einem solchen Fall ein zweites Abtriebsrad an, welches drehbar an dem ersten Glied gelagert ist. Angetrieben durch den zweiten Motor treibt der zweite Riemen dabei das zweite Abtriebsrad an, wodurch aufgrund der drehbar gelagerten Verbindung des zweiten Abtriebsrads an dem ersten Glied das zweite Abtriebsrad relativ zum ersten Glied automatisch gedreht werden kann. Diese Drehbewegung wird in dieser Ausführungsform auf einen dritten Riemen übertragen, welcher entlang des ersten Gliedes zu einem distal weiter entfernten zusätzlichen Gelenk geführt ist. Der dritte Riemen umschlingt dabei ein drittes Abtriebsrad, welches fest mit einem dritten Glied des Roboterarms bzw. der zweiten Baugruppe des Roboterarms verbunden ist. Angetrieben durch den zweiten Motor treibt der zweite Riemen das zweite Abtriebsrad an und das zweite Abtriebsrad treibt über den dritten Riemen das dritte Abtriebsrad an, wodurch aufgrund der festen Verbindung des dritten Abtriebsrads mit dem dritten Glied, das dritte Glied relativ zum ersten Glied automatisch bewegt, insbesondere geschwenkt werden kann. Der dritte Riemen kann durch einen Riemenspanner vorgespannt sein.

Die erfindungsgemäße Aufgabe wird auch gelöst durch ein Verfahren zum Montieren eines Roboterarms, insbesondere zum Montieren eines Roboterarms nach einer Ausführungsform oder nach mehreren Ausführungsformen wie beschrieben, aufweisend die Schritte:
- Vormontieren einer ersten Baugruppe von Gliedern und Gelenken des Roboterarms, wobei eines der Glieder der ersten Baugruppe ein erstes Glied aufweist, das einen ersten Lagerzapfen und einen dem ersten Lagerzapfen gegenüberliegenden zweiten Lagerzapfen aufweist,
- Vormontieren einer zweiten Baugruppe von Gliedern und Gelenken des Roboterarms, wobei eines der Glieder der zweiten Baugruppe ein zweites Glied aufweist, das einen ersten Lagerflansch aufweist, der ausgebildet ist zur drehbar gelagerten Aufnahme des ersten Lagerzapfens des ersten Gliedes und einen zweiten Lagerflansch aufweist, der ausgebildet ist zur drehbar gelagerten Aufnahme des zweiten Lagerzapfens des ersten Gliedes,
   wobei der erste Lagerflansch des zweiten Gliedes eine umfangsseitig geschlossene Aussparung aufweist, der zweite Lagerflansch des zweiten Gliedes eine umfangsseitig offene Aussparung aufweist und die Öffnung der umfangsseitig offenen Aussparung eine Öffnungsweite aufweist, die größer ist, als die Breite des zweiten Lagerzapfens des ersten Gliedes,
- Endmontieren des Roboterarms durch Zusammensetzen der vormontierten ersten Baugruppe und zweiten Baugruppe, indem zunächst der erste Lagerzapfen des ersten Gliedes schräg in die umfangsseitig geschlossene Aussparung des zweiten Gliedes eingeführt wird, dann das erste Glied in seine zur Drehachse des Gelenks fluchtende Einbaulage geschwenkt wird, wobei der zweite Lagerzapfen des ersten Gliedes in einer radialen Richtung durch die Öffnung der umfangsseitig offenen Aussparung des zweiten Lagerflansches des zweiten Gliedes hindurchbewegt wird, und abschließend die Öffnung der umfangsseitig offenen Aussparung des zweiten Lagerflansches durch ein Sicherungsmittel verschlossen wird, welches an dem zweite Lagerflansch befestigt wird, um den zweiten Lagerzapfen des ersten Gliedes an dem zweiten Lagerflansch zu sichern.

Zur Durchführung des Verfahrens kann das Sicherungsmittel von einem ersten Lagerträgerring gebildet werden, der einen ersten Sitz für ein erste Lager bildet, welches ausgebildet ist zum drehbaren Lagern des zweiten Lagerzapfens des ersten Gliedes an dem zweiten Lagerflansch des zweiten Gliedes, wobei der zweite Lagerzapfen des ersten Gliedes an dem zweiten Lagerflansch dadurch gesichert wird, dass der erste Lagerträgerring nach dem Schwenken des ersten Gliedes in die Einbaulage und nach dem Hindurchbewegen des zweiten Lagerzapfens durch die Öffnung der umfangsseitig offenen Aussparung des zweiten Lagerflansches an dem zweiten Lagerflansch befestigt wird.

Zur Durchführung des Verfahrens kann ein zweiter Lagerträgerring vorgesehen sein, der einen zweiten Sitz für ein zweites Lager aufweist, welches ausgebildet ist zum drehbaren Lagern des ersten Lagerzapfens des ersten Gliedes an dem ersten Lagerflansch des zweiten Gliedes, wobei der erste Lagerflansch des zweiten Gliedes einen Montageraum aufweist, der derart bemessen ist, dass der zweite Lagerträgerring in einem von dem erste Lagerflansch gelösten Zustand um eine zumindest im Wesentlichen senkrecht zur Drehachse des Gelenks, welches das erste Glied mit dem zweiten Glied drehbar verbindet, verlaufenden Schwenkachse schwenkbar ist, aufweisend die Schritte des Einführens des ersten Lagerzapfens des ersten Gliedes schräg in die umfangsseitig geschlossene Aussparung des zweiten Gliedes und des Einführens des ersten Lagerzapfens des ersten Gliedes in den zweiten Lagerträgerring in einem vom ersten Lagerflansch gelösten Zustand des zweiten Lagerträgerrings, und des Befestigens des zweiten Lagerträgerrings an dem ersten Lagerflansch, nachdem das erste Glied in seine zur Drehachse des Gelenks fluchtende Einbaulage geschwenkt ist.

Optional kann nach dem Schwenken des ersten Glieds in seine zur Drehachse des Gelenks fluchtende Einbaulage zunächst der erste Lagerträgerring nach dem Hindurchbewegen des zweiten Lagerzapfens durch die Öffnung der umfangsseitig offenen Aussparung des zweiten Lagerflansches an dem zweiten Lagerflansch befestigt werden und anschließend der zweite Lagerträgerring an dem ersten Lagerflansch befestigt werden.

Optional kann vor einem Einführen des ersten Lagerzapfens des ersten Gliedes in die umfangsseitig geschlossene Aussparung des zweiten Gliedes, insbesondere in den zweiten Lagerträgerring, zwischen dem ersten Lagerzapfen und der umfangsseitig geschlossene Aussparung oder des zweiten Lagerträgerring, ein erstes Wälzlager eingefügt werden und/oder vor einem Einführen des zweiten Lagerzapfens des ersten Gliedes in die umfangsseitig offene Aussparung des zweiten Gliedes, insbesondere in den ersten Lagerträgerring, zwischen dem zweiten Lagerzapfen und der umfangsseitig offene Aussparung oder des ersten Lagerträgerring, ein zweites Wälzlager eingefügt werden.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: einen beispielhaften Roboterarm mit einer ersten vormontierten Baugruppe und einer zweiten vormontierten Baugruppe in einem noch nicht endmontierten, getrennten Zustand in einer Ansicht von oben,
- Fig. 2: den Roboterarm gemäß Fig. 1 mit der ersten vormontierten Baugruppe und der zweiten vormontierten Baugruppe in dem noch nicht endmontierten, getrennten Zustand in einer Ansicht von unten,
- Fig. 3: eine vergrößerte Teildarstellung des Roboterarms gemäß Fig. 1 und Fig. 2 im Bereich des ersten Glieds und des zweiten Glieds vor dem Einfügen,
- Fig. 4: eine vergrößerte Teildarstellung des Roboterarms gemäß Fig. 1 und Fig. 2 im Bereich des ersten Glieds und des zweiten Glieds während des Einfügens,
- Fig. 5: eine vergrößerte Teildarstellung des Roboterarms gemäß Fig. 1 und Fig. 2 im Bereich des ersten Glieds und des zweiten Glieds nach dem Einfügen, und
- Fig. 6: ein beispielhaftes Ablaufschema des erfindungsgemäßen Verfahrens.

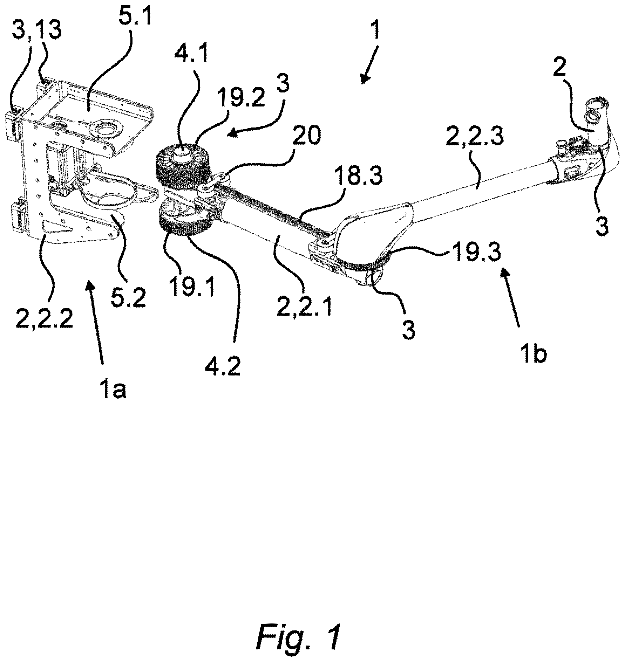

In der Fig. 1 ist ein beispielhafter Roboterarm 1 in einem noch nicht endmontierten, also getrennten Zustand dargestellt, der einer erste vormontierte Baugruppe 1a und eine zweite vormontierte Baugruppe 1b umfasst.

Der Roboterarm 1 weist mehrere Glieder 2 und diese Glieder 2 gegeneinander verstellbar verbindende mehrere Gelenke 3 auf, wobei wenigstens ein erstes Glied 2.1 dieser Glieder 2 einen ersten Lagerzapfen 4.1 und einen dem ersten Lagerzapfen 4.1 gegenüberliegenden zweiten Lagerzapfen 4.2 aufweist.

Der Roboterarm 1 weist außerdem ein mit dem ersten Glied 2.1 mittels eines der Gelenke 3 gelenkig verbundenes zweites Glied 2.2 auf, das einen ersten Lagerflansch 5.1 aufweist, an dem in einem endmontierten Zustand der erste Lagerzapfen 4.1 des ersten Gliedes 2.1 drehbar gelagert ist. Das zweite Glied 2.2 weist zusätzlich einen zweiten Lagerflansch 5.2 auf, an dem der zweite Lagerzapfen 4.2 des ersten Gliedes 2.1 drehbar gelagert ist.

Der erste Lagerzapfen 4.1 und der dem ersten Lagerzapfen 4.1 gegenüberliegende zweite Lagerzapfen 4.2 können, wie dargestellt, in der Bauart von Wellenstummeln ausgebildet sein, deren Wellendrehachsen miteinander fluchten. Insofern können der erste Lagerzapfen 4.1 und der zweite Lagerzapfen 4.2 eine gemeinsame Drehachse bilden, um welche das erste Glied 2.1 relativ zum zweiten Glied 2.2 schwenkbar gelagert ist.

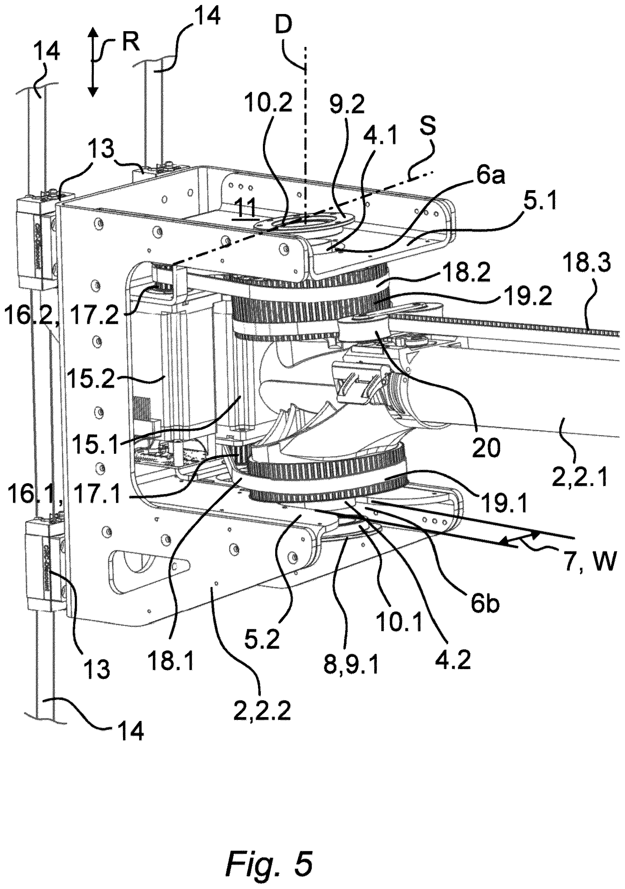

Wie insbesondere in Fig. 5 näher dargestellt ist, weist der erste Lagerflansch 5.1 des zweiten Gliedes 2.2 eine umfangsseitig geschlossene Aussparung 6a auf, in welcher der erste Lagerzapfen 4.1 des ersten Gliedes 2.1 aufgenommen ist. Der zweite Lagerflansch 5.2 des zweiten Gliedes 2.2 weist eine umfangsseitig offene Aussparung 6b auf, in welcher der zweite Lagerzapfen 4.2 des ersten Gliedes 2.1 im endmontierten Zusammenbau aufgenommen ist.

Eine Öffnung 7 der umfangsseitig offenen Aussparung 7b weist eine Öffnungsweite W auf, die größer ist, als die Breite des zweiten Lagerzapfens 4.2 des ersten Gliedes 2.1. Der zweite Lagerflansch 2.2 weist ein Sicherungsmittel 8 auf, mit dem der zweite Lagerzapfen 4.2 des ersten Gliedes 2.1 an der umfangsseitig offenen Aussparung 7b des zweiten Lagerflansches 5.2 gesichert ist.

Das Sicherungsmittel 8 wird im Falle des vorliegenden Ausführungsbeispiels von einem mit dem zweiten Lagerflansch 5.2 des zweiten Gliedes 2.2 lösbar verbundenen ersten Lagerträgerring 9.1 gebildet wird, der einen ersten Sitz 10.1 für ein erstes Lager bildet, welches den zweiten Lagerzapfen 4.2 des ersten Gliedes 2.1 drehbar an dem zweiten Lagerflansch 5.2 des zweiten Gliedes 2.2 lagert. Das erste Lager kann ein erstes Wälzlager bzw. eine erste Wälzlageranordnung sein.

Der erste Lagerflansch 5.1 des zweiten Gliedes 2.2 weist im Falle des vorliegenden Ausführungsbeispiels einen lösbar befestigten zweiten Lagerträgerring 9.2 auf, der einen zweiten Sitz 10.2 für ein zweites Lager bildet, welches den ersten Lagerzapfen 4.1 des ersten Gliedes 2.1 drehbar an dem ersten Lagerflansch 5.1 des zweiten Gliedes 2.2 lagert. Dabei weist der erste Lagerflansch 5.1 des zweiten Gliedes 2.2 einen Montageraum 11 auf, der derart bemessen ist, dass der zweite Lagerträgerring 9.2 in einem von dem ersten Lagerflansch 5.1 gelösten Zustand (Fig. 5) um eine zumindest im Wesentlichen senkrecht zur Drehachse D des Gelenks 3, welches das erste Glied 2.1 mit dem zweiten Glied 2.2 drehbar verbindet, verlaufenden Schwenkachse S innerhalb des Montageraums 11 schwenkbar ist.

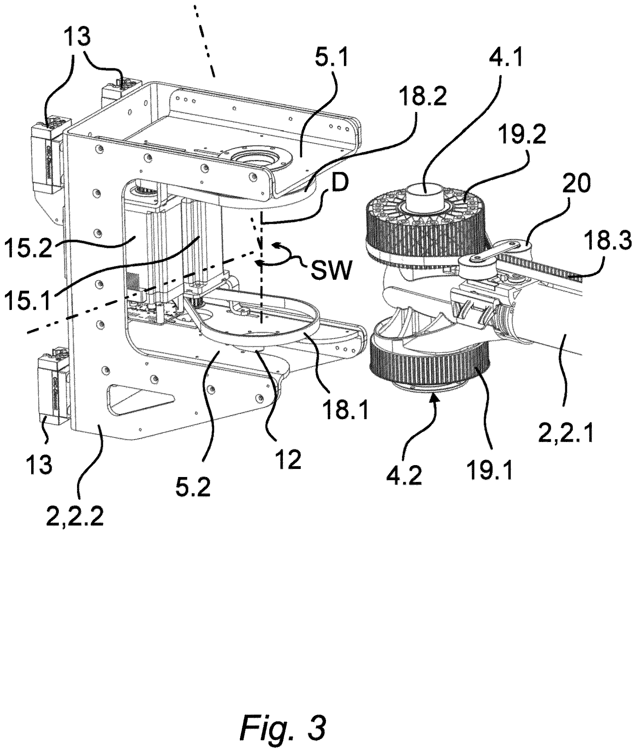

Wenn das Sicherungsmittel 8 von einem mit dem zweiten Lagerflansch 5.2 des zweiten Gliedes 2.2 lösbar verbundenen ersten Lagerträgerring 9.1 gebildet wird, der einen ersten Sitz 10.1 für ein erste Lager bildet, welches den zweiten Lagerzapfen 4.2 des ersten Gliedes 2.1 drehbar an dem zweiten Lagerflansch 5.2 des zweiten Gliedes 2.2 lagert, wobei der zweite Lagerflansch 5.2 in einer Grundkonfiguration des Roboterarms 1 in Schwerkraftrichtung unterhalb des ersten Lagerflansches 5.1 angeordnet ist, wie dies beispielsweise in Fig. 3 bis Fig. 5 aufgezeigt ist, kann im Falle des vorliegenden Ausführungsbeispiels der erste Lagerflansch 5.1 des zweiten Gliedes 2.2 auch einen lösbar befestigten zweiten Lagerträgerring 9.2 aufweisen, der einen zweiten Sitz 10.2 für ein zweites Lager bildet, welches den ersten Lagerzapfen 4.1 des ersten Gliedes 2.1 drehbar an dem ersten Lagerflansch 5.1 des zweiten Gliedes 2.2 lagert, wobei der erste Lagerflansch 5.1 in einer Grundkonfiguration des Roboterarms 1 in Schwerkraftrichtung oberhalb des zweiten Lagerflansches 5.2 angeordnet ist.

In Fig. 3 ist veranschaulicht, wie das von dem ersten Glied 2.1 und dem zweiten Glied 2.2 gebildete Gelenk 3 einen konstruktiv eingeschränkten Schwenkwinkel SW von weniger als 360 Grad aufweisen. Im Falle des vorliegenden Ausführungsbeispiels beträgt der Schwenkwinkel SW beispielsweise weniger als 270 Grad.

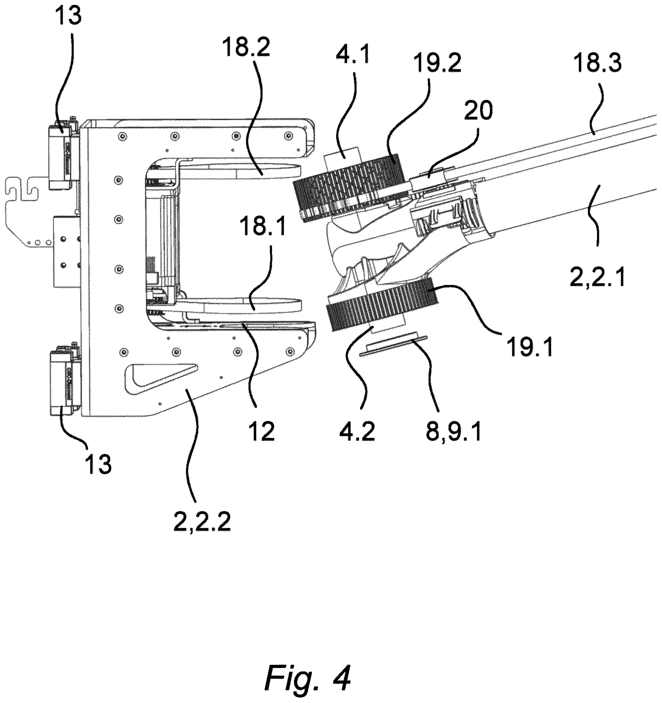

Wie insbesondere aus Fig. 3 ersichtlich ist, ist die Öffnung 7 der umfangsseitige offenen Aussparung 6b am zweiten Lagerflansch 5.2 derart angeordnet, dass das von dem Gelenk 3 auskragende erste Glied 2.1 in einer mittleren Schwenkstellung des Gelenks 3, entsprechend der in Fig. 3 bis Fig. 5 dargestellten Ausrichtung des ersten Glieds 2.1 zu dem zweiten Glied 2.2, im Winkelbereich der Öffnung 7 der umfangsseitigen offenen Aussparung 6b auskragt und die Aussparung 6b an einem der Öffnung 7 diametral gegenüberliegenden Randabschnitt einen Druckkraft-Stützabschnitt 12 (Fig. 3, Fig. 4) aufweist.

Im Falle des vorliegenden Ausführungsbeispiels bildet das zweite Glied 2.2 einen Schlitten einer Linearachse, welche beispielsweise in einer vertikalen Richtung R linear höhenverstellbar ausgebildet sein kann. Das zweite Glied 2.2 bzw. der Schlitten kann dazu ein oder mehrere Gleitsteine 13 aufweisen, mittels derer das zweite Glied 2.2 bzw. der Schlitten an lediglich schematisch dargestellten Schienen 14 linear höhenverstellbar ist. Die Schienen 14 können beispielsweise an einer ortsfesten Wand oder einem ortsfesten Gestell befestigt sein.

Das zweite Glied 2.2 kann aus mehreren Blechen zusammengesetzt sein, wobei eines der Bleche den ersten Lagerflansch 5.1 und ein anderes Blech den zweiten Lagerflansch 5.2 bilden kann.

An dem zweiten Glied 2.2 kann ein erster Motor 15.1, insbesondere ein erster elektrischer Motor angeordnet sein. Der erste Motor 15.1 weist eine erste Motorwelle 16.1 auf. Die erste Motorwelle 16.1 kann beispielsweise ein erstes Ritzel 17.1 aufweisen, auf welchem ein erster Riemen 18.1 aufgespannt ist. Der erste Riemen 18.1 treibt ein erstes Abtriebsrad 19.1 an, welches fest mit dem ersten Glied 2.1 verbunden ist. Angetrieben durch den ersten Motor 15.1 treibt der erste Riemen 18.1 das erste Abtriebsrad 19.1 an, wodurch aufgrund der festen Verbindung mit dem ersten Glied 2.1 das erste Glied 2.1 relativ zum zweiten Glied 2.2 automatisch geschwenkt werden kann.

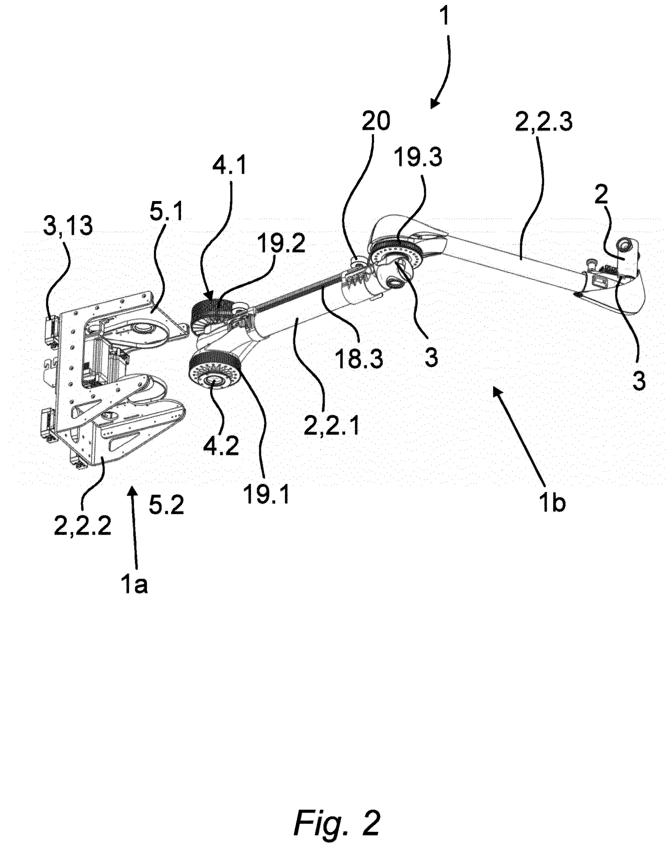

An dem zweiten Glied 2.2 kann optional außerdem ein zweiter Motor 15.2, insbesondere ein zweiter elektrischer Motor angeordnet sein. Der zweite Motor 15.2 weist eine zweite Motorwelle 16.2 auf. Die zweite Motorwelle 16.2 kann beispielsweise ein zweites Ritzel 17.2 aufweisen, auf welchem ein zweiter Riemen 18.2 aufgespannt ist. Der zweite Riemen 18.2 treibt ein zweites Abtriebsrad 19.2 an, welches drehbar an dem ersten Glied 2.1 gelagert ist. Angetrieben durch den zweiten Motor 15.2 treibt der zweite Riemen 18.2 das zweite Abtriebsrad 19.2 an, wodurch aufgrund der drehbar gelagerten Verbindung des zweiten Abtriebsrads 19.2 an dem ersten Glied 2.1 das zweite Abtriebsrad 19.2 relativ zum ersten Glied 2.1 automatisch gedreht werden kann. Diese Drehbewegung wird auf einen dritten Riemen 18.3 übertragen, welcher entlang des ersten Gliedes 2.1 zu einem distal weiter entfernten zusätzlichen Gelenk 3 geführt ist, wie dies insbesondere in Fig. 1 und Fig. 2 aufgezeigt ist. Der dritte Riemen 18.3 umschlingt dabei ein drittes Abtriebsrad 19.3 (Fig. 1 und Fig. 2) welches fest mit einem dritten Glied 2.3 des Roboterarms 1 bzw. der zweiten Baugruppe 1b des Roboterarms 1 verbunden ist. Angetrieben durch den zweiten Motor 15.2 treibt der zweite Riemen 18.2 das zweite Abtriebsrad 19.2 an und das zweite Abtriebsrad 19.2 treibt über den dritten Riemen 18.3 das dritte Abtriebsrad 19.3 an, wodurch aufgrund der festen Verbindung des dritten Abtriebsrads 19.3 mit dem dritten Glied 2.3, das dritte Glied 2.3 relativ zum ersten Glied 2.1 automatisch bewegt, insbesondere geschwenkt werden kann. Der dritte Riemen 18.3 kann durch einen Riemenspanner 20 vorgespannt sein.

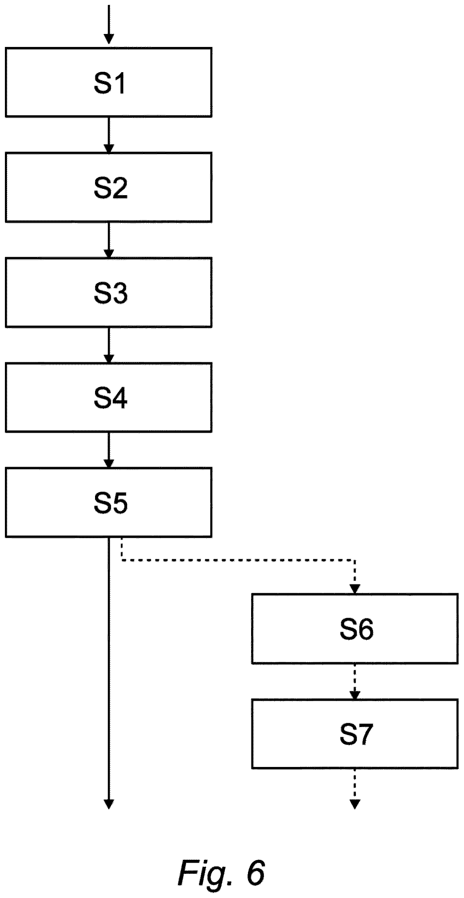

Das Verfahren zum Montieren eines Roboterarms 1, insbesondere zum Montieren eines Roboterarms 1 wie in Fig. 1 bis Fig. 5 dargestellt ist, weist die in Fig. 6 schematisch aufgezeigten Schritte auf.

In einem ersten Schritt S1 erfolgt ein Vormontieren einer ersten Baugruppe 1a von Gliedern 2 und Gelenken 3 des Roboterarms 1, wobei eines der Glieder 2 der ersten Baugruppe 1a ein erstes Glied 2.1 aufweist, das einen ersten Lagerzapfen 4.1 und einen dem ersten Lagerzapfen 4.1 gegenüberliegenden zweiten Lagerzapfen 4.2 aufweist.

In einem zweiten Schritt S2 erfolgt ein Vormontieren einer zweiten Baugruppe 1b von Gliedern 2 und Gelenken 3 des Roboterarms 1, wobei eines der Glieder 2 der zweiten Baugruppe 1b ein zweites Glied 2.2 aufweist, das einen ersten Lagerflansch 5.1 aufweist, der ausgebildet ist zur drehbar gelagerten Aufnahme des ersten Lagerzapfens 4.1 des ersten Gliedes 2.1 und einen zweiten Lagerflansch 5.2 aufweist, der ausgebildet ist zur drehbar gelagerten Aufnahme des zweiten Lagerzapfens 4.2 des ersten Gliedes 2.1.

Dabei weist der erste Lagerflansch 5.1 des zweiten Gliedes 2.2 eine umfangsseitig geschlossene Aussparung 6a auf, der zweite Lagerflansch 5.2 des zweiten Gliedes 2.2 weist eine umfangsseitig offene Aussparung 6b auf und die Öffnung 7 der umfangsseitig offenen Aussparung 6b weist eine Öffnungsweite W auf, die größer ist, als die Breite des zweiten Lagerzapfens 4.2 des ersten Gliedes 2.1.

Bei einem anschließenden Endmontieren des Roboterarms 1 durch Zusammensetzen der vormontierten ersten Baugruppe 1a und zweiten Baugruppe 1b, erfolgt zunächst in einem dritten Schritt S3 ein Einführen des ersten Lagerzapfens 4.1 des ersten Gliedes 2.1 schräg in die umfangsseitig geschlossene Aussparung 6a des zweiten Gliedes 2.2.

Dann erfolgt in einem vierten Schritt S4 ein Schwenken des ersten Glieds 2.1 in seine zur Drehachse D des Gelenks 3 fluchtende Einbaulage, wobei der zweite Lagerzapfen 4.2 des ersten Gliedes 2.1 in einer radialen Richtung durch die Öffnung 7 der umfangsseitig offenen Aussparung 6b des zweiten Lagerflansches 5.2 des zweiten Gliedes 2.2 hindurchbewegt wird.

In einem abschließenden fünften Schritt S5 erfolgt ein Verschließen der Öffnung 7 der umfangsseitig offenen Aussparung 6b des zweiten Lagerflansches 5.2 durch ein Sicherungsmittel 8, welches an dem zweite Lagerflansch 5.2 befestigt wird, um den zweiten Lagerzapfen 4.2 des ersten Gliedes 2.1 an dem zweiten Lagerflansch 5.2 zu sichern.

Im Falle das dargestellten Ausführungsbeispiels wird das Sicherungsmittel 8 von dem ersten Lagerträgerring 9.1 gebildet, der einen ersten Sitz 10.1 für ein erste Lager bildet, welches ausgebildet ist zum drehbaren Lagern des zweiten Lagerzapfens 4.2 des ersten Gliedes 2.1 an dem zweiten Lagerflansch 5.2 des zweiten Gliedes 2.2. Dabei wird der zweite Lagerzapfen 4.2 des ersten Gliedes 2.1 an dem zweiten Lagerflansch 5.2 dadurch gesichert, dass der erste Lagerträgerring 9.1 nach dem Schwenken des ersten Gliedes 2.1 in die Einbaulage und nach dem Hindurchbewegen des zweiten Lagerzapfens 4.2 durch die Öffnung 7 der umfangsseitig offenen Aussparung 6b des zweiten Lagerflansches 5.2 an dem zweiten Lagerflansch 5.2 befestigt wird.

Ein zweiter Lagerträgerring 9.2 ist vorgesehen, der einen zweiten Sitz 10.2 für ein zweites Lager aufweist, welches ausgebildet ist zum drehbaren Lagern des ersten Lagerzapfens 4.1 des ersten Gliedes 2.1 an dem ersten Lagerflansch 5.1 des zweiten Gliedes 2.2. Dabei weist der erste Lagerflansch 5.1 des zweiten Gliedes 2.2 einen Montageraum 11 auf, der derart bemessen ist, dass der zweite Lagerträgerring 9.2 in einem von dem erste Lagerflansch 5.1 gelösten Zustand um eine zumindest im Wesentlichen senkrecht zur Drehachse D des Gelenks 3, welches das erste Glied 2.1 mit dem zweiten Glied 2.2 drehbar verbindet, verlaufenden Schwenkachse S schwenkbar ist.

Das Verfahren umfasst in dieser beispielhaften Ausführungsform in einem zusätzlichen sechsten Schritt S6 ein Einführen des ersten Lagerzapfens 5.1 des ersten Gliedes 2.1 schräg in die umfangsseitig geschlossene Aussparung 6a des zweiten Gliedes 2.2 und des Einführens des ersten Lagerzapfens 4.1 des ersten Gliedes 2.1 in den zweiten Lagerträgerring 9.2 in einem vom ersten Lagerflansch 5.1 gelösten Zustand des zweiten Lagerträgerrings 9.2, und in einem zusätzlichen siebten Schritt S7 ein Befestigen des zweiten Lagerträgerrings 9.2 an dem ersten Lagerflansch 5.1, nachdem das erste Glied 2.1 in seine zur Drehachse D des Gelenks 3 fluchtende Einbaulage geschwenkt ist.

Nach dem Schwenken des ersten Glieds 2.1 in seine zur Drehachse D des Gelenks 3 fluchtende Einbaulage kann zunächst der erste Lagerträgerring 9.1 nach dem Hindurchbewegen des zweiten Lagerzapfens 4.2 durch die Öffnung 7 der umfangsseitig offenen Aussparung 6b des zweiten Lagerflansches 5.2 an dem zweiten Lagerflansch 5.2 befestigt werden und anschließend der zweite Lagerträgerring 9.2 an dem ersten Lagerflansch 5.1 befestigt werden.

Vor einem Einführen des ersten Lagerzapfens 4.1 des ersten Gliedes 2.1 in die umfangsseitig geschlossene Aussparung 6a des zweiten Gliedes 2.2, insbesondere in den zweiten Lagerträgerring 9.2, kann zwischen dem ersten Lagerzapfen 4.1 und der umfangsseitig geschlossene Aussparung 6a oder des zweiten Lagerträgerring 9.2, ein erstes Wälzlager eingefügt werden und auch vor einem Einführen des zweiten Lagerzapfens 4.2 des ersten Gliedes 2.1 in die umfangsseitig offene Aussparung 6b des zweiten Gliedes 2.2, insbesondere in den ersten Lagerträgerring 9.1, zwischen dem zweiten Lagerzapfen 4.2 und der umfangsseitig offene Aussparung 7 oder des ersten Lagerträgerring 9.1, ein zweites Wälzlager eingefügt werden.

## Patentansprüche

1. Roboterarm, aufweisend mehrere Glieder (2) und diese Glieder (2) gegeneinander verstellbar verbindende mehrere Gelenke (3), wobei wenigstens ein erstes Glied (2.1) dieser Glieder (2) einen ersten Lagerzapfen (4.1) und einen dem ersten Lagerzapfen (4.1) gegenüberliegenden zweiten Lagerzapfen (4.2) aufweist, und ein mit dem ersten Glied (2.1) mittels eines der Gelenke (3) gelenkig verbundenes zweites Glied (2.2) einen ersten Lagerflansch (5.1) aufweist, an dem der erste Lagerzapfen (4.1) des ersten Gliedes (2.1) drehbar gelagert ist und einen zweiten Lagerflansch (5.2) aufweist, an dem der zweite Lagerzapfen (4.2) des ersten Gliedes (2.1) drehbar gelagert ist, **dadurch gekennzeichnet, dass** der erste Lagerflansch (5.1) des zweiten Gliedes (2.2) eine umfangsseitig geschlossene Aussparung (6a) aufweist, in welcher der erste Lagerzapfen (4.1) des ersten Gliedes (2.1) aufgenommen ist, und der zweite Lagerflansch (5.2) des zweiten Gliedes (2.2) eine umfangsseitig offene Aussparung (6b) aufweist, in welcher der zweite Lagerzapfen (4.2) des ersten Gliedes (2.1) aufgenommen ist, wobei eine Öffnung (7) der umfangsseitig offenen Aussparung (6b) eine Öffnungsweite (W) aufweist, die größer ist, als die Breite des zweiten Lagerzapfens (4.2) des ersten Gliedes (2.1), und der zweite Lagerflansch (5.2) ein Sicherungsmittel (8) aufweist, mit dem der zweite Lagerzapfen (4.2) des ersten Gliedes (2.1) an der umfangsseitig offenen Aussparung (6b) des zweiten Lagerflansches (5.2) gesichert ist.

2. Roboterarm nach Anspruch 1, **dadurch gekennzeichnet, dass** das Sicherungsmittel (8) von einem mit dem zweiten Lagerflansch (5.2) des zweiten Gliedes (2.2) lösbar verbundenen ersten Lagerträgerring (9.1) gebildet wird, der einen ersten Sitz (10.1) für ein erstes Lager bildet, welches den zweiten Lagerzapfen (4.2) des ersten Gliedes (2.1) drehbar an dem zweiten Lagerflansch (5.2) des zweiten Gliedes (2.2) lagert.

3. Roboterarm nach Anspruch 2, **dadurch gekennzeichnet, dass** der erste Lagerflansch (5.1) des zweiten Gliedes (2.2) einen lösbar befestigten zweiten Lagerträgerring (9.2) aufweist, der einen zweiten Sitz (10.2) für ein zweites Lager bildet, welches den ersten Lagerzapfen (4.1) des ersten Gliedes (2.1) drehbar an dem ersten Lagerflansch (5.1) des zweiten Gliedes (2.2) lagert, wobei der erste Lagerflansch (5.1) des zweiten Gliedes (2.2) einen Montageraum (11) aufweist, der derart bemessen ist, dass der zweite Lagerträgerring (9.2) in einem von dem ersten Lagerflansch (5.1) gelösten Zustand um eine zumindest im Wesentlichen senkrecht zur Drehachse (D) des Gelenks (3), welches das erste Glied (2.1) mit dem zweiten Glied (2.2) drehbar verbindet, verlaufenden Schwenkachse (S) innerhalb des Montageraums (11) schwenkbar ist.

4. Roboterarm nach Anspruch 1, **dadurch gekennzeichnet, dass** das Sicherungsmittel (8) von einem mit dem zweiten Lagerflansch (5.2) des zweiten Gliedes (2.2) lösbar verbundenen ersten Lagerträgerring (9.1) gebildet wird, der einen ersten Sitz (10.1) für ein erste Lager bildet, welches den zweiten Lagerzapfen (4.2) des ersten Gliedes (2.1) drehbar an dem zweiten Lagerflansch (5.2) des zweiten Gliedes (2.2) lagert, wobei der zweite Lagerflansch (5.2) in einer Grundkonfiguration des Roboterarms (1) in Schwerkraftrichtung unterhalb des ersten Lagerflansches (5.1) angeordnet ist, und der erste Lagerflansch (5.1) des zweiten Gliedes (2.2) einen lösbar befestigten zweiten Lagerträgerring (9.2) aufweist, der einen zweiten Sitz (10.2) für ein zweites Lager bildet, welches den ersten Lagerzapfen (4.1) des ersten Gliedes (2.1) drehbar an dem ersten Lagerflansch (5.1) des zweiten Gliedes (2.2) lagert, wobei der erste Lagerflansch (5.1) in einer Grundkonfiguration des Roboterarms (1) in Schwerkraftrichtung oberhalb des zweiten Lagerflansches (5.2) angeordnet ist.

5. Roboterarm nach einem der Ansprüche 1 bis 4, **dadurch gekennzeichnet, dass** das von dem ersten Glied (2.1) und dem zweiten Glied (2.2) gebildete Gelenk einen konstruktiv eingeschränkten Schwenkwinkel (SW) von weniger als 360 Grad aufweist, wobei die Öffnung (7) der umfangsseitige offenen Aussparung (6b) am zweiten Lagerflansch (5.2) derart angeordnet ist, dass das von dem Gelenk (3) auskragende erste Glied (2.1) in einer mittleren Schwenkstellung des Gelenks (3) im Winkelbereich der Öffnung (7) der umfangsseitigen offenen Aussparung (6b) auskragt und die Aussparung (6b) an einem der Öffnung (7) diametral gegenüberliegenden Randabschnitt einen Druckkraft-Stützabschnitt (12) aufweist.

6. Verfahren zum Montieren eines Roboterarms (1) nach einem der Ansprüche 1 bis 5, aufweisend die Schritte:
- Vormontieren einer ersten Baugruppe (1a) von Gliedern (2) und Gelenken (3) des Roboterarms (1), wobei eines der Glieder (2) der ersten Baugruppe (1a) ein erstes Glied (2.1) aufweist, das einen ersten Lagerzapfen (4.1) und einen dem ersten Lagerzapfen (4.1) gegenüberliegenden zweiten Lagerzapfen (4.2) aufweist,
- Vormontieren einer zweiten Baugruppe (1b) von Gliedern (2) und Gelenken (3) des Roboterarms (1), wobei eines der Glieder (2) der zweiten Baugruppe (1b) ein zweites Glied (2.2) aufweist, das einen ersten Lagerflansch (5.1) aufweist, der ausgebildet ist zur drehbar gelagerten Aufnahme des ersten Lagerzapfens (4.1) des ersten Gliedes (2.1) und einen zweiten Lagerflansch (5.2) aufweist, der ausgebildet ist zur drehbar gelagerten Aufnahme des zweiten Lagerzapfens (4.2) des ersten Gliedes (2.1),
wobei der erste Lagerflansch (5.1) des zweiten Gliedes (2.2) eine umfangsseitig geschlossene Aussparung (6a) aufweist, der zweite Lagerflansch (5.2) des zweiten Gliedes (2.2) eine umfangsseitig offene Aussparung (6b) aufweist und die Öffnung (7) der umfangsseitig offenen Aussparung (6b) eine Öffnungsweite (W) aufweist, die größer ist, als die Breite des zweiten Lagerzapfens (4.2) des ersten Gliedes (2.1),
- Endmontieren des Roboterarms (1) durch Zusammensetzen der vormontierten ersten Baugruppe (1a) und zweiten Baugruppe (1b), indem zunächst der erste Lagerzapfen (4.1) des ersten Gliedes (2.1) schräg in die umfangsseitig geschlossene Aussparung (6a) des zweiten Gliedes (2.2) eingeführt wird, dann das erste Glied (2.1) in seine zur Drehachse (D) des Gelenks (3) fluchtende Einbaulage geschwenkt wird, wobei der zweite Lagerzapfen (4.2) des ersten Gliedes (2.1) in einer radialen Richtung durch die Öffnung (7) der umfangsseitig offenen Aussparung (6b) des zweiten Lagerflansches (5.2) des zweiten Gliedes (2.2) hindurchbewegt wird, und abschließend die Öffnung (7) der umfangsseitig offenen Aussparung (6b) des zweiten Lagerflansches (5.2) durch ein Sicherungsmittel (8) verschlossen wird, welches an dem zweite Lagerflansch (5.2) befestigt wird, um den zweiten Lagerzapfen (4.2) des ersten Gliedes (2.1) an dem zweiten Lagerflansch (5.2) zu sichern.

7. Verfahren nach Anspruch 6, **dadurch gekennzeichnet, dass** das Sicherungsmittel (8) von einem ersten Lagerträgerring (9.1) gebildet wird, der einen ersten Sitz (10.1) für ein erste Lager bildet, welches ausgebildet ist zum drehbaren Lagern des zweiten Lagerzapfens (4.2) des ersten Gliedes (2.1) an dem zweiten Lagerflansch (5.2) des zweiten Gliedes (2.2), wobei der zweite Lagerzapfen (4.2) des ersten Gliedes (2.1) an dem zweiten Lagerflansch (5.2) dadurch gesichert wird, dass der erste Lagerträgerring (9.1) nach dem Schwenken des ersten Gliedes (2.1) in die Einbaulage und nach dem Hindurchbewegen des zweiten Lagerzapfens (4.2) durch die Öffnung (7) der umfangsseitig offenen Aussparung (6b) des zweiten Lagerflansches (5.2) an dem zweiten Lagerflansch (5.2) befestigt wird.

8. Verfahren nach Anspruch 7, **dadurch gekennzeichnet, dass** ein zweiter Lagerträgerring (9.2) vorgesehen ist, der einen zweiten Sitz (10.2) für ein zweites Lager aufweist, welches ausgebildet ist zum drehbaren Lagern des ersten Lagerzapfens (4.1) des ersten Gliedes (2.1) an dem ersten Lagerflansch (5.1) des zweiten Gliedes (2.2), wobei der erste Lagerflansch (5.1) des zweiten Gliedes (2.2) einen Montageraum (11) aufweist, der derart bemessen ist, dass der zweite Lagerträgerring (9.2) in einem von dem erste Lagerflansch (5.1) gelösten Zustand um eine zumindest im Wesentlichen senkrecht zur Drehachse (D) des Gelenks (3), welches das erste Glied (2.1) mit dem zweiten Glied (2.2) drehbar verbindet, verlaufenden Schwenkachse (S) schwenkbar ist, aufweisend die Schritte des Einführens des ersten Lagerzapfens (4.1) des ersten Gliedes (2.1) schräg in die umfangsseitig geschlossene Aussparung (6a) des zweiten Gliedes (2.2) und des Einführens des ersten Lagerzapfens (4.1) des ersten Gliedes (2.1) in den zweiten Lagerträgerring (9.2) in einem vom ersten Lagerflansch (5.1) gelösten Zustand des zweiten Lagerträgerrings (9.2), und des Befestigens des zweiten Lagerträgerrings (9.2) an dem ersten Lagerflansch (5.1), nachdem das erste Glied (2.1) in seine zur Drehachse (D) des Gelenks (3) fluchtende Einbaulage geschwenkt ist.

9. Verfahren nach Anspruch 8, **dadurch gekennzeichnet, dass** nach dem Schwenken des ersten Glieds (2.1) in seine zur Drehachse (D) des Gelenks (3) fluchtende Einbaulage zunächst der erste Lagerträgerring (9.1) nach dem Hindurchbewegen des zweiten Lagerzapfens (4.2) durch die Öffnung (7) der umfangsseitig offenen Aussparung (6b) des zweiten Lagerflansches (5.2) an dem zweiten Lagerflansch (5.2) befestigt wird und anschließend der zweite Lagerträgerring (9.2) an dem ersten Lagerflansch (5.1) befestigt wird.

10. Verfahren nach einem der Ansprüche 7 bis 9, **dadurch gekennzeichnet, dass** vor einem Einführen des ersten Lagerzapfens (4.1) des ersten Gliedes (2.1) in die umfangsseitig geschlossene Aussparung (6a) des zweiten Gliedes (2.2), insbesondere in den zweiten Lagerträgerring (9.2), zwischen dem ersten Lagerzapfen (4.1) und der umfangsseitig geschlossene Aussparung (6a) oder des zweiten Lagerträgerring (9.2), ein erstes Wälzlager eingefügt wird und/oder vor einem Einführen des zweiten Lagerzapfens (4.2) des ersten Gliedes (2.1) in die umfangsseitig offene Aussparung (6b) des zweiten Gliedes (2.2), insbesondere in den ersten Lagerträgerring (9.1), zwischen dem zweiten Lagerzapfen (4.2) und der umfangsseitig offene Aussparung (6b) oder des ersten Lagerträgerring (9.1), ein zweites Wälzlager eingefügt wird.

## Claims

1. Robot arm, having a plurality of members (2) and a plurality of joints (3), which connect said members (2) such that they are adjustable relative to one another, wherein at least a first member (2.1) of said members (2) has a first bearing journal (4.1) and a second bearing journal (4.2) opposite the first bearing journal (4.1), and a second member (2.2), which is connected in an articulated manner to the first member (2.1) by means of one of the joints (3), has a first bearing flange (5.1), on which the first bearing journal (4.1) of the first member (2.1) is rotatably mounted and has a second bearing flange (5.2), on which the second bearing journal (4.2) of the first member (2.1) is rotatably mounted, **characterized in that** the first bearing flange (5.1) of the second member (2.2) has a circumferentially closed cutout (6a), in which the first bearing journal (4.1) of the first member (2.1) is received, and the second bearing flange (5.2) of the second member (2.2) has a circumferentially open cutout (6b), in which the second bearing journal (4.2) of the first member (2.1) is received, wherein an opening (7) of the circumferentially open cutout (6b) has an opening width (W) that is larger than the width of the second bearing journal (4.2) of the first member (2.1), and the second bearing flange (5.2) has a securing means (8), which is used to secure the second bearing journal (4.2) of the first member (2.1) on the circumferentially open cutout (6b) in the second bearing flange (5.2).

2. Robot arm according to Claim 1, **characterized in that** the securing means (8) is formed by a first bearing carrier ring (9.1), which is detachably connected to the second bearing flange (5.2) of the second member (2.2) and forms a first seat (10.1) for a first bearing, which rotatably mounts the second bearing journal (4.2) of the first member (2.1) on the second bearing flange (5.2) of the second member (2.2).

3. Robot arm according to Claim 2, **characterized in that** the first bearing flange (5.1) of the second member (2.2) has a detachably fastened second bearing carrier ring (9.2), which forms a second seat (10.2) for a second bearing, which rotatably mounts the first bearing journal (4.1) of the first member (2.1) on the first bearing flange (5.1) of the second member (2.2), wherein the first bearing flange (5.1) of the second member (2.2) has an assembly space (11), which is dimensioned in such a manner that the second bearing carrier ring (9.2), in a state in which it is detached from the first bearing flange (5.1), can be pivoted within the assembly space (11) about a pivot axis (S), which runs at least substantially perpendicular to the axis of rotation (D) of the joint (3), which rotatably connects the first member (2.1) to the second member (2.2).

4. Robot arm according to Claim 1, **characterized in that** the securing means (8) is formed by a first bearing carrier ring (9.1), which is detachably connected to the second bearing flange (5.2) of the second member (2.2) and forms a first seat (10.1) for a first bearing, which rotatably mounts the second bearing journal (4.2) of the first member (2.1) on the second bearing flange (5.2) of the second member (2.2), wherein the second bearing flange (5.2), in a basic configuration of the robot arm (1), is arranged below the first bearing flange (5.1) in the direction of gravity, and the first bearing flange (5.1) of the second member (2.2) has a detachably fastened second bearing carrier ring (9.2), which forms a second seat (10.2) for a second bearing, which rotatably mounts the first bearing journal (4.1) of the first member (2.1) on the first bearing flange (5.1) of the second member (2.2), wherein the first bearing flange (5.1), in a basic configuration of the robot arm (1), is arranged above the second bearing flange (5.2) in the direction of gravity.

5. Robot arm according to one of Claims 1 to 4, **characterized in that** the joint formed by the first member (2.1) and the second member (2.2) has a structurally restricted pivot angle (SW) of less than 360 degrees, wherein the opening (7) of the circumferentially open cutout (6b) is arranged on the second bearing flange (5.2) in such a manner that the first member (2.1) protruding from the joint (3) protrudes, in a central pivot position of the joint (3), within the angular range of the opening (7) of the circumferentially open cutout (6b) and the cutout (6b) has, on an edge portion diametrically opposite the opening (7), a pressure force supporting portion (12).

6. Method for assembling a robot arm (1) according to one of Claims 1 to 5, having the steps of:
- pre-assembling a first assembly (1a) of members (2) and joints (3) of the robot arm (1), wherein one of the members (2) of the first assembly (1a) has a first member (2.1), which has a first bearing journal (4.1) and a second bearing journal (4.2) opposite the first bearing journal (4.1),
- pre-assembling a second assembly (1b) of members (2) and joints (3) of the robot arm (1), wherein one of the members (2) of the second assembly (1b) has a second member (2.2), which has a first bearing flange (5.1), which is designed for receiving the first bearing journal (4.1) of the first member (2.1) such that it is rotatably mounted, and has a second bearing flange (5.2), which is designed for receiving the second bearing journal (4.2) of the first member (2.1) such that it is rotatably mounted,
wherein the first bearing flange (5.1) of the second member (2.2) has a circumferentially closed cutout (6a), the second bearing flange (5.2) of the second member (2.2) has a circumferentially open cutout (6b), and the opening (7) of the circumferentially open cutout (6b) has an opening width (W) that is larger than the width of the second bearing journal (4.2) of the first member (2.1),
- final assembly of the robot arm (1) by placing the pre-assembled first assembly (1a) and second assembly (1b) together, by first of all inserting the first bearing journal (4.1) of the first member (2.1) obliquely into the circumferentially closed cutout (6a) in the second member (2.2), then pivoting the first member (2.1) into its installation position in alignment with the axis of rotation (D) of the joint (3), wherein the second bearing journal (4.2) of the first member (2.1) is moved in a radial direction through the opening (7) of the circumferentially open cutout (6b) in the second bearing flange (5.2) of the second member (2.2), and finally closing the opening (7) of the circumferentially open cutout (6b) in the second bearing flange (5.2) by way of a securing means (8), which is fastened to the second bearing flange (5.2), in order to secure the second bearing journal (4.2) of the first member (2.1) to the second bearing flange (5.2).

7. Method according to Claim 6, **characterized in that** the securing means (8) is formed by a first bearing carrier ring (9.1), which forms a first seat (10.1) for a first bearing, which is designed for rotatably mounting the second bearing journal (4.2) of the first member (2.1) on the second bearing flange (5.2) of the second member (2.2), wherein the second bearing journal (4.2) of the first member (2.1) is secured on the second bearing flange (5.2) **in that** the first bearing carrier ring (9.1) is fastened to the second bearing flange (5.2) after the first member (2.1) has been pivoted into the installation position and after the second bearing journal (4.2) has been moved through the opening (7) of the circumferentially open cutout (6b) in the second bearing flange (5.2).

8. Method according to Claim 7, **characterized in that** provision is made for a second bearing carrier ring (9.2), which has a second seat (10.2) for a second bearing, which is designed for rotatably mounting the first bearing journal (4.1) of the first member (2.1) on the first bearing flange (5.1) of the second member (2.2), wherein the first bearing flange (5.1) of the second member (2.2) has an assembly space (11), which is dimensioned in such a manner that the second bearing carrier ring (9.2), in a state in which it is detached from the first bearing flange (5.1), can be pivoted about a pivot axis (S), which runs at least substantially perpendicular to the axis of rotation (D) of the joint (3), which rotatably connects the first member (2.1) to the second member (2.2), having the steps of inserting the first bearing journal (4.1) of the first member (2.1) obliquely into the circumferentially closed cutout (6a) in the second member (2.2) and of inserting the first bearing journal (4.1) of the first member (2.1) into the second bearing carrier ring (9.2) in a state in which it is detached from the first bearing flange (5.1), and of fastening the second bearing carrier ring (9.2) to the first bearing flange (5.1) after the first member (2.1) has been pivoted into its installation position in alignment with the axis of rotation (D) of the joint (3).

9. Method according to Claim 8, **characterized in that**, after the first member (2.1) has been pivoted into its installation position in alignment with the axis of rotation (D) of the joint (3), first of all the first bearing carrier ring (9.1) is fastened to the second bearing flange (5.2) after the second bearing journal (4.2) has been moved through the opening (7) of the circumferentially open cutout (6b) in the second bearing flange (5.2) and subsequently the second bearing carrier ring (9.2) is fastened to the first bearing flange (5.1).

10. Method according to one of Claims 7 to 9, **characterized in that** a first rolling bearing is inserted between the first bearing journal (4.1) and the circumferentially closed cutout (6a) or the second bearing carrier ring (9.2) before the first bearing journal (4.1) of the first member (2.1) is inserted into the circumferentially closed cutout (6a) in the second member (2.2), in particular into the second bearing carrier ring (9.2), and/or a second rolling bearing is inserted between the second bearing journal (4.2) and the circumferentially open cutout (6b) or the first bearing carrier ring (9.1) before the second bearing journal (4.2) of the first member (2.1) is inserted into the circumferentially open cutout (6b) in the second member (2.2), in particular into the first bearing carrier ring (9.1) .

## Revendications

1. Bras de robot, présentant plusieurs éléments (2) et plusieurs articulations (3) reliant ces éléments (2) de manière réglable les uns par rapport aux autres, au moins un premier élément (2.1) de ces éléments (2) présentant un premier tourillon (4.1) et un deuxième tourillon (4.2) opposé au premier tourillon (4.1), et un deuxième élément (2.2) relié de manière articulée au premier élément (2.1) au moyen de l'une des articulations (3), présentant une première bride de palier (5.1) sur laquelle le premier tourillon (4.1) du premier élément (2.1) est monté de manière rotative et présentant une deuxième bride de palier (5.2) sur laquelle le deuxième tourillon (4.2) du premier élément (2.1) est monté de manière rotative, **caractérisé en ce que** la première bride de palier (5.1) du deuxième élément (2.2) présente un évidement (6a) fermé sur le pourtour, dans lequel est reçu le premier tourillon (4.1) du premier élément (2.1), et la deuxième bride de palier (5.2) du deuxième élément (2.2) présente un évidement (6b) ouvert sur le pourtour, dans lequel est reçu le deuxième tourillon (4.2) du premier élément (2.1), une ouverture (7) de l'évidement (6b) ouvert sur le pourtour présentant une largeur d'ouverture (W) qui est supérieure à la largeur du deuxième tourillon (4.2) du premier élément (2.1), et la deuxième bride de palier (5.2) présentant un moyen de sécurisation (8) par lequel le deuxième tourillon (4.2) du premier élément (2.1) est sécurisé à l'évidement (6b) ouvert sur le pourtour de la deuxième bride de palier (5.2).

2. Bras de robot selon la revendication 1, **caractérisé en ce que** le moyen de sécurisation (8) est formé par une première bague de support de palier (9.1) reliée de manière amovible à la deuxième bride de palier (5.2) du deuxième élément (2.2), qui forme un premier siège (10.1) pour un premier palier qui supporte de manière rotative le deuxième tourillon (4.2) du premier élément (2.1) sur la deuxième bride de palier (5.2) du deuxième élément (2.2) .

3. Bras de robot selon la revendication 2, **caractérisé en ce que** la première bride de palier (5.1) du deuxième élément (2.2) présente une deuxième bague de support de palier (9.2) fixée de manière amovible, qui forme un deuxième siège (10.2) pour un deuxième palier qui supporte de manière rotative le premier tourillon (4.1) du premier élément (2.1) sur la première bride de palier (5.1) du deuxième élément (2.2), la première bride de palier (5.1) du deuxième élément (2.2) présentant un espace de montage (11) qui est dimensionné de telle sorte que la deuxième bague de support de palier (9.2), dans un état détaché de la première bride de palier (5.1), peut pivoter à l'intérieur de l'espace de montage (11) autour d'un axe de pivotement (S) s'étendant au moins essentiellement perpendiculairement à l'axe de rotation (D) de l'articulation (3) qui relie de manière rotative le premier élément (2.1) au deuxième élément (2.2).

4. Bras de robot selon la revendication 1, **caractérisé en ce que** le moyen de sécurisation (8) est formé par une première bague de support de palier (9.1) reliée de manière amovible à la deuxième bride de palier (5.2) du deuxième élément (2.2), qui forme un premier siège (10.1) pour un premier palier qui supporte de manière rotative le deuxième tourillon (4.2) du premier élément (2.1) sur la deuxième bride de palier (5.2) du deuxième élément (2.2), la deuxième bride de palier (5.2) étant agencée en dessous de la première bride de palier (5.1) dans la direction de la force de pesanteur dans une configuration de base du bras de robot (1), et la première bride de palier (5.1) du deuxième élément (2.2) présentant une deuxième bague de support de palier (9.2) fixée de manière amovible, qui forme un deuxième siège (10.2) pour un deuxième palier qui supporte de manière rotative le premier tourillon (4.1) du premier élément (2.1) sur la première bride de palier (5.1) du deuxième élément (2.2), la première bride de palier (5.1) étant agencée au-dessus de la deuxième bride de palier (5.2) dans la direction de la force de pesanteur dans une configuration de base du bras de robot (1).

5. Bras de robot selon l'une quelconque des revendications 1 à 4, **caractérisé en ce que** l'articulation formée par le premier élément (2.1) et le deuxième élément (2.2) présente un angle de pivotement (SW) limité par construction de moins de 360 degrés, l'ouverture (7) de l'évidement (6b) ouvert sur le pourtour sur la deuxième bride de palier (5.2) étant agencée de telle sorte que le premier élément (2.1) en saillie de l'articulation (3), dans une position de pivotement moyenne de l'articulation (3), fait saillie dans la zone angulaire de l'ouverture (7) de l'évidement (6b) ouvert sur le pourtour, et l'évidement (6b) présentant une section d'appui de force de compression (12) sur une section de bord diamétralement opposée à l'ouverture (7).

6. Procédé de montage d'un bras de robot (1) selon l'une quelconque des revendications 1 à 5, présentant les étapes suivantes :
- le prémontage d'un premier ensemble (1a) d'éléments (2) et d'articulations (3) du bras de robot (1), l'un des éléments (2) du premier ensemble (1a) présentant un premier élément (2.1), qui présente un premier tourillon (4.1) et un deuxième tourillon (4.2) opposé au premier tourillon (4.1),
- le prémontage d'un deuxième ensemble (1b) d'éléments (2) et d'articulations (3) du bras de robot (1), l'un des éléments (2) du deuxième ensemble (1b) présentant un deuxième élément (2.2), qui présente une première bride de palier (5.1) configurée pour recevoir de manière supportée en rotation le premier tourillon (4.1) du premier élément (2.1) et une deuxième bride de palier (5.2) configurée pour recevoir de manière supportée en rotation le deuxième tourillon (4.2) du premier élément (2.1),
la première bride de palier (5.1) du deuxième élément (2.2) présentant un évidement (6a) fermé sur le pourtour, la deuxième bride de palier (5.2) du deuxième élément (2.2) présentant un évidement (6b) ouvert sur le pourtour, et l'ouverture (7) de l'évidement (6b) ouvert sur le pourtour présentant une largeur d'ouverture (W) qui est supérieure à la largeur du deuxième tourillon (4.2) du premier élément (2.1),
- le montage final du bras de robot (1) en assemblant le premier ensemble (1a) et le deuxième ensemble (1b) prémontés, en introduisant d'abord le premier tourillon (4.1) du premier élément (2.1) obliquement dans l'évidement (6a) fermé sur le pourtour du deuxième élément (2.2), puis en pivotant le premier élément (2.1) dans sa position de montage alignée avec l'axe de rotation (D) de l'articulation (3), le deuxième tourillon (4.2) du premier élément (2.1) étant déplacé dans une direction radiale à travers l'ouverture (7) de l'évidement (6b) ouvert sur le pourtour de la deuxième bride de palier (5.2) du deuxième élément (2.2), et finalement l'ouverture (7) de l'évidement (6b) ouvert sur le pourtour de la deuxième bride de palier (5.2) étant fermée par un moyen de sécurisation (8) qui est fixé sur la deuxième bride de palier (5.2) pour sécuriser le deuxième tourillon (4.2) du premier élément (2.1) sur la deuxième bride de palier (5.2).

7. Procédé selon la revendication 6, **caractérisé en ce que** le moyen de sécurisation (8) est formé par une première bague de support de palier (9.1), qui forme un premier siège (10.1) pour un premier palier configuré pour supporter de manière rotative le deuxième tourillon (4.2) du premier élément (2.1) sur la deuxième bride de palier (5.2) du deuxième élément (2.2), le deuxième tourillon (4.2) du premier élément (2.1) étant sécurisé sur la deuxième bride de palier (5.2) en fixant la première bague de support de palier (9.1) sur la deuxième bride de palier (5.2) après le pivotement du premier élément (2.1) dans la position de montage et après le déplacement du deuxième tourillon (4.2) à travers l'ouverture (7) de l'évidement (6b) ouvert sur le pourtour de la deuxième bride de palier (5.2).

8. Procédé selon la revendication 7, **caractérisé en ce qu'**il est prévu une deuxième bague de support de palier (9.2) qui présente un deuxième siège (10.2) pour un deuxième palier qui est configuré pour supporter de manière rotative le premier tourillon (4.1) du premier élément (2.1) sur la première bride de palier (5.1) du deuxième élément (2.2), la première bride de palier (5.1) du deuxième élément (2.2) présentant un espace de montage (11) qui est dimensionné de telle sorte que la deuxième bague de support de palier (9.2), dans un état détaché de la première bride de palier (5.1), peut pivoter autour d'un axe de pivotement (S) s'étendant au moins essentiellement perpendiculairement à l'axe de rotation (D) de l'articulation (3) qui relie de manière rotative le premier élément (2.1) au deuxième élément (2.2), présentant les étapes d'introduction du premier tourillon (4.1) du premier élément (2.1) obliquement dans l'évidement (6a) fermé sur le pourtour du deuxième élément (2.2) et d'introduction du premier tourillon (4.1) du premier élément (2.1) dans la deuxième bague de support de palier (9.2) dans un état de la deuxième bague de support de palier (9.2) détachée de la première bride de palier (5.1), et de fixation de la deuxième bague de support de palier (9.2) sur la première bride de palier (5.1) après que le premier élément (2.1) a été pivoté dans sa position de montage alignée avec l'axe de rotation (D) de l'articulation (3).

9. Procédé selon la revendication 8, **caractérisé en ce qu'**après le pivotement du premier élément (2.1) dans sa position de montage alignée avec l'axe de rotation (D) de l'articulation (3), la première bague de support de palier (9.1) est d'abord fixée à la deuxième bride de palier (5.2) après le déplacement du deuxième tourillon (4.2) à travers l'ouverture (7) de l'évidement (6b) ouvert sur le pourtour de la deuxième bride de palier (5.2) et ensuite la deuxième bague de support de palier (9.2) est fixée à la première bride de palier (5.1).

10. Procédé selon l'une quelconque des revendications 7 à 9, **caractérisé en ce qu'**avant une introduction du premier tourillon (4.1) du premier élément (2.1) dans l'évidement (6a) fermé sur le pourtour du deuxième élément (2.2), notamment dans la deuxième bague de support de palier (9.2), un premier palier de roulement (4.1) est inséré entre le premier tourillon (4.1) et l'évidement (6a) fermé sur le pourtour ou la deuxième bague de support de palier (9.2), et/ou avant une introduction du deuxième tourillon (4.2) du premier élément (2.1) dans l'évidement (6b) ouvert sur le pourtour du deuxième élément (2.2), notamment dans la première bague de support de palier (9.1), un deuxième palier à roulement est inséré entre le deuxième tourillon (4.2) et l'évidement (6b) ouvert sur le pourtour ou la première bague de support de palier (9.1).
